Europäisches Patentamt

European Patent Office

Office européen des brevets

(11) Veröffentlichungsnummer: **0 250 729 B1**

# EUROPÄISCHE PATENTSCHRIFT

(45) Veröffentlichungstag der Patentschrift: 04.12.91

(21) Anmeldenummer: 87104854.2

(22) Anmeldetag: 02.04.87

(51) Int. Cl.5: **H04L 25/49**, G11B 20/14, H03M 5/14

(54) **Anordnung zum Uebertragen eines Datenstromes.**

(30) Priorität: 27.06.86 CH 2613/86

(43) Veröffentlichungstag der Anmeldung:
07.01.88 Patentblatt 88/01

(45) Bekanntmachung des Hinweises auf die
Patenterteilung:
04.12.91 Patentblatt 91/49

(84) Benannte Vertragsstaaten:
AT BE CH DE ES FR GB GR IT LI NL SE

(56) Entgegenhaltungen:
FR-A- 2 529 415
US-A- 4 408 325

PATENT ABSTRACTS OF JAPAN, Band 9, Nr.
185 (E-332)[1908], 31. Juli 1985; & JP-A-60 55
760

PATENT ABSTRACTS OF JAPAN, Band 8, Nr.
194 (E-264)[1631], 6. September 1984; & JP-
A-59 83 441

PATENT ABSTRACTS OF JAPAN, Band 7, Nr.
186 (E-193)[1331],, 16. August 1983; & JP-A-58
88 952

(73) Patentinhaber: **SIEMENS-ALBIS AKTIENGE-
SELLSCHAFT**
**PV/Patente und Verträge Postfach**
**CH-8047 Zürich(CH)**

(84) Benannte Vertragsstaaten:
**CH LI**

Patentinhaber: **SIEMENS AKTIENGESELL-
SCHAFT**
**Wittelsbacherplatz 2**
**W-8000 München 2(DE)**

(84) Benannte Vertragsstaaten:
**BE DE ES FR GB GR IT NL SE AT**

(72) Erfinder: **Lutz, Jean-Maurice**
**Zürcherstrasse 33**
**CH-8953 Dietikon(CH)**
Erfinder: **Wildhaber, Andreas**
**Ackermannstrasse 25**
**CH-8044 Zürich(CH)**

PATENT ABSTRACTS OF JAPAN, Band 7, Nr. 166 (E-188)[1311], 21. Juli 1983; & JP-A-58 71 752

PATENT ABSTRACTS OF JAPAN, Band 5, Nr. 149 (E-75)[821], 19. September 1981; & JP-A-56 83 164

## Beschreibung

Die vorliegende Erfindung betrifft eine Anordnung zum Uebertragen eines Datenstromes nach dem Oberbegriff des Patentanspruches 1.

Bei der Uebertragung von ternärcodierten Datensignalen über ein elektrooptisches Lichtleitersystem stellt sich das Problem, dass bei der Uebertragung von Licht vielfach nur zwei Zustände zugelassen sind : Licht vorhanden oder nicht. Aus diesem Grund muss manchmal ein ternärcodierter Datenstrom in eine dem Lichtleitersystem zugeführte binärcodierte Sequenz elektrischer Signale umgewandelt werden, die für die weitere Uebertragung der Daten über Lichtleiter geeignet ist. Zu diesem Zweck ist beispielsweise aus den Technischen Mitteilungen PTT, 7/1979, Seite 258 ein Coder bekannt, der ein übliches ternäres "HDB3-codiertes" Signal mit drei Pegeln in ein binäres sogenanntes "2-Pegel-HDB3-codiertes" Signal umwandelt. Dort ist ebenfalls ein CMI-Umwandler (Seite 256) beschrieben, der beispielsweise aus einem Bit "0" eine Bithälftenkombination "01" und aus einem Bit "1" eine Bithälftenkombination "11" oder "00" erzeugt, was als 1-Bit-zu-2-Bit-Codierung bekannt ist.

Durch die vorliegende Erfindung soll eine spezielle Lösung für ein Uebertragungssystem für 1-Bit-zu-2-Bit-codierte Lichtleitersignale angegeben werden, mit dessen Hilfe neben dem Hauptdatenstrom noch zusätzliche Informationssignale übertragbar sind.

Dies wird erfindungsgemäss durch die im kennzeichnenden Teil des Patentanspruchs 1 angegebenen Massnahmen erreicht. Vorteilhafte Ausgestaltungen der Erfindung sind in weiteren Ansprüchen angegeben.

Die Erfindung wird nachfolgend durch Beschreibung von Ausführungsbeispielen anhand von Zeichnungen näher erläutert. Es zeigt :

Fig. 1 das Blockschaltbild eines erfindungsgemässen Uebertragungssystems,
Fig. 2 das Schaltbild eines Coders zu einem solchen System,
Fig. 3 eine Darstellung verschiedener Signale in diesem Coder,
Fig. 4 das Schaltbild eines Decoders zu einem solchen System,
Fig. 5 eine Darstellung verschiedener Signale in diesem Decoder.

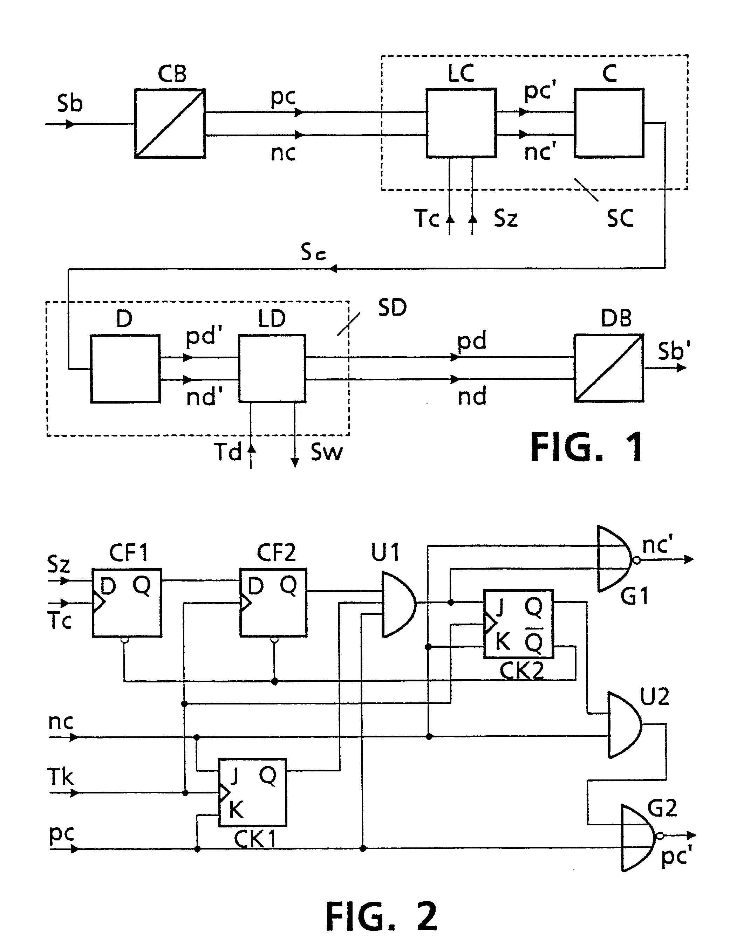

Das Uebertragungssystem nach Fig. 1 umfasst einen Coder C zur Umwandlung eines HDB3-codierten Datenstroms pc', nc' in eine binärcodierte MCMI-Sequenz Sc und einen an den Ausgang des Coders C über ein Uebertragungsmedium, beispielsweise einen Lichtleiter, angeschlossenen Decoder D zur Umwandlung der empfangenen MCMI-Sequenz Sc in einen HDB3-codierten Datenstrom pd', nd'. Dem Coder C ist eine Logikschaltung LC vorgeschaltet, die eingangsseitig mit je einem Signalstrom pc und nc sowie mit einem Takt Tc und einem zusätzlichen Signal Sz beaufschlagt ist. Die Signale pc und nc können beispielsweise von einem Ternär/Binär-Wandler CB geliefert werden. Dem Decoder D ist eine Logikschaltung LD nachgeschaltet, die je einen Signalstrom pd und nd sowie ein zusätzliches Signal Sw liefert. Die Signale pd und nd können beispielsweise von einem Binär/Ternär-Wandler DB in Signale Sb' umgewandelt werden, die den Eingangssignalen Sb des Wandlers CB entsprechen.

Das Uebertragungssystem nach Fig. 1 funktioniert folgendermassen:

Der Coder C und die Logikschaltung LC bilden einen Systemcoder SC und der Decoder D und die Schaltung LD einen Systemdecoder SD. Zur Vereinfachung der Erklärungen sei zunächst angenommen, dass der Wandler CB ein ternäres PCM-Signal Sb von 2 MBit/s in je ein binäres Signal pc = PCM + und nc = PCM- umwandelt, die jeweils dem positiven bzw. negativen Spannungsanteil eines HDB-3-Signals entsprechen. Dementsprechend liefert der Coder C ein MCMI-Signal Sc, das über den Systemdecoder SD in je ein binäres Signal pd = PCM' + bzw. nd = PCM'- umgewandelt wird, aus denen der Wandler DB das Signal Sb' rekonstruiert.

Wenn die Signale Tc und Sz nicht vorhanden sind, das heisst, wenn ständig Tc = 0 bzw. Sz = 0 ist, ist die Schaltung LC an sich unwirksam und die Signale pc und nc werden dem Coder C zugeführt, der gemäss folgender bekannter

TABELLE I

| Sz | pc | nc | Sc | (HDB3) |
|----|----|----|----|--------|
| 0  | 1  | 0  | 11 | + 1    |
| 0  | 0  | 0  | 01 | 0      |
| 0  | 0  | 1  | 00 | - 1    |

arbeitet. In diesem Fall ist auch die Schaltung LD an sich unwirksam; sie gibt kein Signal Sw ab (Sw = 0) und die entsprechende Decodierung erfolgt gemäss folgender

3

EP 0 250 729 B1

TABELLE II

| Sc | pd | nd | Sw | (HDB3) |
|----|----|----|----|--------|
| 11 | 1 | 0 | 0 | + 1 |
| 01 | 0 | 0 | 0 | 0 |
| 00 | 0 | 1 | 0 | - 1 |

Wenn aber die Signale Tc und Sz ankommen, das heisst bei einer aktiven Flanke Tc für Sz = 1, wird der Systemcoder SC derart wirksam, dass er gemäss folgender

TABELLE III

| Sz | pc | nc | Sc | (HDB3) |
|----|----|----|----|--------|
| 1 | 1 | 0 | (10) | + 1 |
| 1 | 0 | 0 | 01 | 0 |
| 1 | 0 | 1 | (10) | - 1 |

funktioniert. Der Coder arbeitet jedoch nur bedingt nach Tabelle III; er liefert ein Bitpaar 10 zunächst nur für einen ersten ankommenden Impuls pc = 1 und dann nur für den ersten nach diesem Impuls pc = 1 ankommenden Impuls nc = 1, sonst arbeitet er nach Tabelle I, auch dann, wenn Sz = 1 bleibt.

Bei einer Sequenz + 1, 0, 0, + 1, 0, - 1, wäre beispielsweise die Tabelle III nur für den ersten Impuls + 1 und für den letzten Impuls -1 gültig. Nach dem Impuls -1 wird die Tabelle III nur nach Ankunft einer aktiven Flanke vom Takt Tc wieder verwendet. Der Systemdecoder SD hat somit die Aufgabe, von zwei ankommenden Impulsen Sc = 10 den ersten in einem Impuls pd = + 1 und den zweiten In einem Impuls nd = 1 gemäss

TABELLE IV

| Sc | pd | nd | Sw | (HDB3) |
|----|----|----|----|--------|
| 10 | 1 | 0 | - | + 1 |
| oder 10 | 0 | 1 | 1 | - 1 |
| 01 | 0 | 0 | 0 | 0 |

umzuwandeln, indem der Systemdecoder SD zugleich vorzugsweise ein Signal Sw = 1 bei pd = 0, nd = 1 erzeugt, wobei es auch umgekehrt Sw = 1 bei pd = 1, nd = 0 sein könnte. Das somit gewonnene Signal Sw weist denselben Informationsgehalt wie das Signal Sz auf, so dass dadurch ein zusätzlicher Informationskanal gebildet wird.

Die Logikschaltung nach Fig. 2 weist ein D-Flipflop CF1, dessen D-Eingang das Signal Sz und dessen Takteingang ein Taktsignal Tc von beispielsweise 48 k Bit/s zugeführt wird, sowie eine Kippstufe CK1 auf, deren J-Eingang mit dem Signal nc, deren K-Eingang mit dem Signal pc und deren Takteingang mit einem Taktsignal Tk von beispielsweise 2,048 M Bit/s beaufschlagt ist. Der Q-Ausgang des Flipflops CF1 ist mit dem D-Eingang eines weiteren mit dem Takt Tk aktivierten Flipflops CF2 verbunden. Die Q-Ausgangssignale des Flipflops CF2 und der Kippstufe CK1 und das Signal pc sind über ein UND-TorU1 verknüpft, dessen Ausgang mit dem J-Eingang einer weiteren mit dem Takt Tk beaufschlagten Kippstufe CK2 und mit dem einen Eingang eines Nicht-ODER-Gatters G1 verbunden ist, das ein Signal nc' liefert. Der andere Eingang des Gatters G1, der K-Eingang der Kippstufe CK2 und der erste Eingang eines weiteren UND-Tores U2 sind gemeinsam mit dem Signal nc beaufschlagt. Ein weiteres Nicht-ODER-Gatter G2 verknüpft das Signal pc und das Ausgangssignal des eingangsseitig mit dem Q-Ausgang der Kippstufe CK2 verbundenen UND-Tores U2 und bildet daraus ein Signal pc'. Die Flipflops CF1 und CF2 weisen je einen invertierenden mit dem invertierten Ausgangssignal der Kippstufe CK2 aktivierten Rücksetzeingang auf.

Die Schaltung nach Fig. 2 funktioniert folgendermassen:

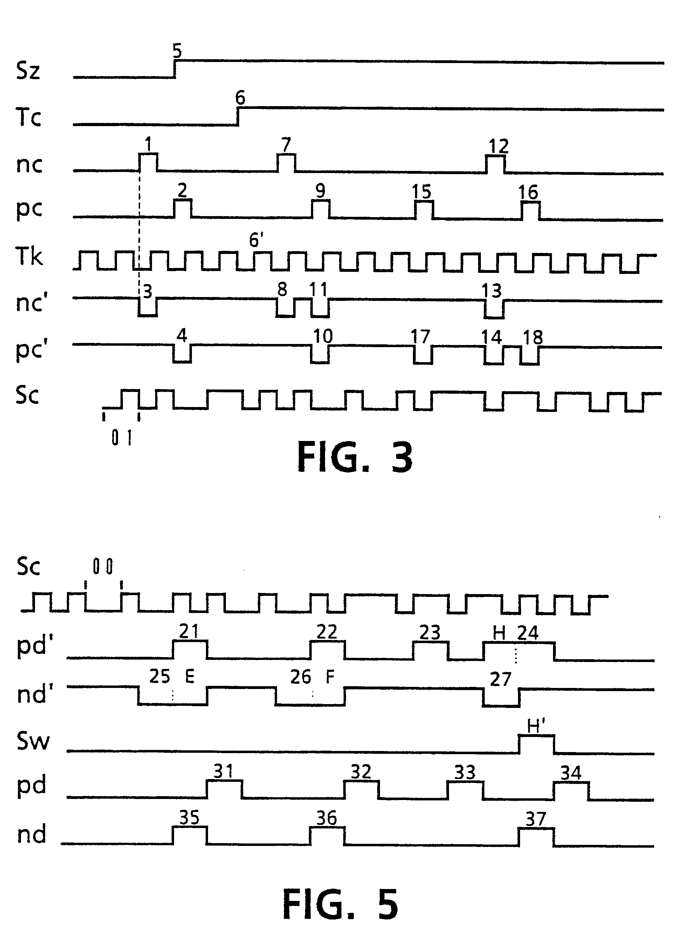

Für gewisse Anwendungen, wie zur Uebertragung von AMI-codierten Signalen, kann die Kippstufe CK1 entfallen und somit auch ein UND-Tor U1 mit nur zwei Eingängen verwendet werden. Im folgenden soll daher die Kippstufe CK1 zunächst unberücksichtigt bleiben. Solange keine Signale Tc bzw. Sz vorhanden

4

sind, das heisst, bei Tc = 0 bzw. Sz = 0, werden die Flipflops CF1, CF2 und die Kippstufe CK2 nicht aktiviert, so dass die Signale nc und pc, beispielsweise die Impulse 1 bzw. 2 in Fig. 3, lediglich invertiert als Signale nc' bzw. pc' (Impulse 3 bzw. 4) die Schaltung durchlaufen. Die Inversionen der Signale nc' und pc' sind beispielsweise notwendig bei Verwendung einer Art üblicher Coder C, die eine interne Inversion bewirken. Anderenfalls können die Gatter G1 und G2 normale ODER-Gatter sein. Erst durch eine ansteigende Flanke 5 (Fig. 3) des Signals Sz wird über die Elemente CF1, CF2, CK2 der Weg für die modifizierte Arbeitsweise eröffnet, so dass mit der ersten ansteigenden Flanke 6 des Taktes Tc das Flipflop CF1 und mit der nächsten ansteigenden Flanke des Taktes Tk das Flipflop CF2 aktiviert wird. Der Takt Tc lässt zunächst den nc-Impuls 7 transparent invertiert als nc'-Impuls 8 erscheinen.

Die Aktivierung des Flipflops CF2 bewirkt daher, dass ein danach ankommender pc-Impuls 9 nicht nur als invertierter pc'-Impuls 10 erscheint, sondern dass zugleich ein zusätzlicher invertierter nc'-Impuls 11 über die Tore U1 und G1 übertragen wird. Damit wird zugleich die Kippstufe CK2 aktiviert, was eine Rücksetzung der Flipflops CF1, CF2 zur Folge hat. Die Aktivierung der Kippstufe CK2 bewirkt dann, dass der erste danach ankommende nc-Impuls 12 nicht nur transparent als invertierter nc'-Impuls 13 erscheint, sondern dass zugleich ein zusätzlicher invertierter pc'-Impuls 14 über die Tore U2 und G2 übertragen wird. Damit wird zugleich die Kippstufe CK2 zurückgesetzt, so dass nach der Bildung des Impulses 14 keine weitere Wirkung entfaltet wird. Lediglich eine neue ansteigende Taktflanke kann für Sz = 1 wieder wirksam sein. Die anderen in Fig. 3 dargestellten pc-Impulse 15 und 16 werden ebenfalls transparent invertiert als pc'-Impulse 17 bzw. 18 übertragen. Die Impulse 11 und 14 können beispielsweise mit Hilfe eines ODER-Gatters, das die Signale nc' und pc' verknüpft, ausgefiltert und als zusätzliche Information ausgewertet werden. In Fig. 3 sind beispielsweise schmale Impulse dargestellt. Die Schaltung könnte ebenfalls mit breiteren Impulsen (Fig. 5) arbeiten.

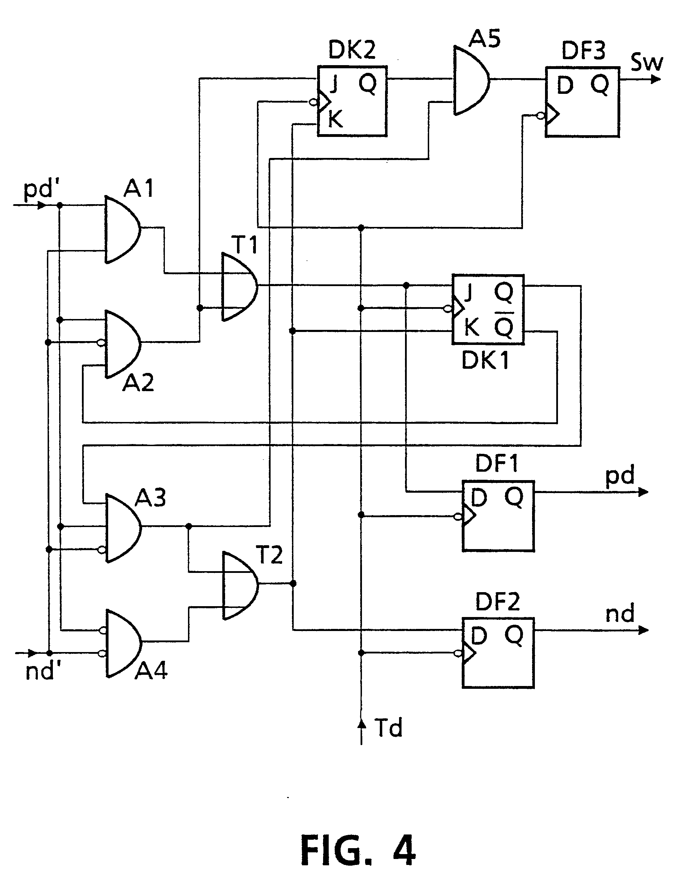

Die Logikschaltung nach Fig. 4 weist zwei UND-Tore A1 und A2 auf, deren Ausgangssignale in einem ODER-Tor T1 zusammengefasst werden, dessen Ausgang mit dem J-Eingang einer Kippstufe DK1 und mit dem D-Eingang eines D-Flipflops DF1 verbunden ist. Die Logikschaltung umfasst zwei weitere UND-Tore A3 und A4, deren Ausgangssignale in einem ODER-Tor T2 zusammengefasst werden, dessen Ausgang mit dem K-Eingang der Kippstufe DK1, mit dem K-Eingang einer weiteren Kippstufe DK2 und mit dem D-Eingang eines D-Flipflops DF2 verbunden ist. Die Tore A1, A2, A3 und A4 werden eingangsseitig sowohl mit dem Signal pd' als auch mit dem Signal nd' beaufschlagt. Dabei weisen die Tore A2 und A3 je einen invertierenden Eingang für das Signal nd' auf. Beim Tor A4 sind beide Eingänge invertierend. Die Tore A2 und A3 sind zusätzlich über je einen weiteren Eingang mit dem Ausgangssignal der Kippstufe DK1 bzw. mit deren invertiertem Ausgangssignal beaufschlagt. Der Ausgang des Tores A2 ist mit dem J-Eingang der Kippstufe DK2 verbunden, dessen Ausgangssignal mit dem Ausgangssignal des Tores A3 durch ein weiteres UND-Tor A5 verknüpft wird, der ausgangsseitig an den D-Eingang eines D-Flipflops DF3 angeschlossen ist. Die Kippstufen DK1 und DK2 und die D-Flipflops DF1, DF2, DF3 werden gemeinsam über je einen invertierenden Takteingang mit einem Taktsignal Td gesteuert. Die drei Flipflops DF1, DF2 und DF3 geben die Signale pd, nd bzw. Sw ab.

Die Schaltung nach Fig. 4 funktioniert folgendermassen:

Als Beispiel wird angenommen, dass Impulse pd', nd' empfangen werden, die eine volle Breite (Fig. 5) aufweisen, und dass die Impulse nd' nicht invertiert ankommen. Die Schaltung wirkt wie ein Filter, welches für die pd'-Impulse 21, 22, 23, 24 (Fig. 5) transparent ist, die somit als pd-Impulse 31, 32, 33, 34 erscheinen, und welches die nd'-Impulse 25, 26, 27 als invertierte Impulse 35, 36, 37 abgibt. Die Impulse E, F und H werden als Signale pd und nd unterdrückt; der Impuls H erscheint jedoch als Impuls H' des Signals Sw. Die Kippstufe DK1 speichert ein Bit, das die Polarität jedes ankommenden Bitpaares darstellt, wobei die Bitpaare 11 und 10 der positiven Polarität durch das Tor A1 bzw. A2 und die Bitpaare 10 und 00 der negativen Polarität durch das Tor A3 bzw. A4 erkannt werden. Die Gatter T1 und T2 fassen alle Bitpaare positiver bzw. negativer Polarität zusammen. Die Flipflops DF1 und DF2 dienen zur Zeitregenerierung von deren D-Eingangssignale. Die Kippstufe DK2 wird über den Eingang J mit einem Bitpaar 10 positiver Polarität aktiviert. Danach wird über das Tor A5 das Flipflop DF3 mit einem Bitpaar 10 negativer Polarität auf den Wert Sw = 1 gesetzt; gleichzeitig wird die Kippstufe DK2 über deren Eingang durch das Bitpaar 10 negativer Polarität zurückgesetzt, welches das Tor A5 verriegelt, wobei beim nächsten Takt Td das Flipflop DF3 zurückgesetzt wird. Die Kippstufe DK2 wird auch über deren Eingang K mit einem Bitpaar 00 zurückgesetzt, was die Aktivierung des Flipflops DF3 verhindert. Es besteht auch die Möglichkeit, diese Aktivierung des Flipflops DF3 nicht zu verhindern, indem man in der Schaltung eine Verbindung des Eingangs K der Kippstufe DK2 mit dem Ausgang des Tores A3 statt mit dem Ausgang des Tores T2 vorsieht.

Durch den Einsatz der Kippstufe CK1 in der Schaltung nach Fig. 2 ist der Systemcoder auch für HDB3-codierte Signale anwendbar, die gelegentlich sogenannte Bipolaritätsverletzungen aufweisen, die die Polarität eines Bitpaares uneindeutig machen. Das Flipflop CK1 bewirkt jeweils eine Verriegelung des Tores U1 für den zweiten von zwei nacheinander ankommenden Impulsen pc = 1, der somit unwirksam wird. Im Decoder ist hingegen eine derartige Massnahme nicht notwendig. Bei einem Uebertragungssystem für codierte Signale, bei dem leichte Schwankungen der Gleichstromkomponente belanglos sind, genügt die Bildung eines einzigen zusätzlichen Impulses (11 oder 14, Fig. 3) pro Taktflanke (6).

## Patentansprüche

1. Anordnung zum Uebertragen eines Datenstromes (Sc) mit einem Systemcoder (SC), der die zu übertragenden Signale (pc) positiver Polarität mit den zu übertragenden Signalen (nc) negativer Polarität verknüpft, um daraus einen 1-Bit-zu-2-Bit-codierten Datenstrom zu erzeugen, **dadurch gekennzeichnet,** dass, um neben dem Hauptdatenstrom (Sb) ein zusätzliches Informationssignal (Sz) zu übertragen, der Systemcoder (SC) eine Logikschaltung (LC) umfasst, nach deren Aktivierung durch das zusätzliche Informationssignal (Sz) beim Eintreffen mindestens eines Bits (9) des Signals (pc) einer ersten Polarität ein zusätzliches Bit (11) unter den Signalen (nc') der zweiten Polarität erzeugt wird.

2. Anordnung nach Anspruch 1, **dadurch gekennzeichnet,** dass nach der Erzeugung des zusätzlichen Bits (11) beim Eintreffen mindestens eines Bits (12) des Signals (nc) der zweiten Polarität ein zusätzliches Bit (14) unter den Signalen (pc') der ersten Polarität erzeugt wird.

3. Anordnung nach Anspruch 1 und 2, **dadurch gekennzeichnet,** dass mit dem massgeblichen Bit (9) des Signals (pc) der ersten Polarität (pc), welches nach der Aktivierung der Logikschaltung (LC) ankommt, ein zusätzliches Bit (11) unter den Signalen (nc') der zweiten Polarität und mit dem ersten Bit (12) unter den Signalen (nc) der zweiten Polarität, welches nach dem massgeblichen Bit (9) ankommt, ein zusätzliches Bit (14) unter den Signalen (pc') der ersten Polarität erzeugt wird,

4. Anordnung nach Anspruch 3, **dadurch gekennzeichnet,** dass das massgebliche Bit (9) das erste der betreffenden Polarität entsprechende Bit (9) ist, das nach der Aktivierung der Logikschaltung (LC) ankommt.

5. Anordnung nach Anspruch 3, **dadurch gekennzeichnet,** dass das massgebliche Bit das erste der betreffenden Polarität entsprechende Bit ist, das ohne Bipolaritätsverletzung nach der Aktivierung der Logikschaltung (LC) ankommt.

## Claims

1. Arrangement for the transmission of a data stream (Sc) with a system coder (SC), which links the signals (pc) of positive polarity to be transmitted with the signals (nc) of negative polarity to be transmitted, in order to produce therefrom a 1-bit-to-2-bit coded data stream, characterized in that in order to transmit an additional information signal (Sz) in addition to the main data stream (Sb), the system coder (SC) comprises a logic circuit (LC), after the activation of which by means of the additional information signal (Sz) with the arrival of at least one bit (9) of the signal (pc) of a first polarity an additional bit (11) is produced under the signals (nc') of the second polarity.

2. Arrangement according to claim 1, characterized in that after the production of the additional bit (11), an additional bit (14) is produced under the signals (pc') of the first polarity with the arrival of at least one bit (12) of the signal (nc) of the second polarity.

3. Arrangement according to claim 1 and 2, characterized in that an additional bit (11) is produced under the signals (nc') of the second polarity, with the relevant bit (9) of the signal (pc) of the first polarity (pc), which arrives after the activation of the logic circuit (LC), and an additional bit (14) is produced under the signals (pc') of the first polarity, with the first bit (12) under the signals (nc) of the second polarity, which arrives after the relevant bit (9).

4. Arrangement according to claim 3, characterized in that the relevant bit (9) is the first bit (9) corresponding to the concerned polarity which arrives after the activation of the logic circuit (LC).

5. Arrangement according to claim 3, characterized in that the relevant bit is the first bit corresponding to the concerned polarity which arrives without bipolarity violation after the activation of the logic circuit (LC).

**Revendications**

1. Dispositif pour transmettre un flux de données (Sc), comportant un codeur (SC) du système, qui combine les signaux à transmettre (pc) possédant une polarité positive aux signaux à transmettre (nc) possédant une polarité négative, pour produire, à partir de là, un flux de données à codage 1-bit-en-2 bits, caractérisé par le fait que, pour transmettre un signal supplémentaire d'information (Sz) en plus du flux de données principal (Sb), le codeur (SC) du système comporte un circuit logique (LC), après l'activation de ce circuit par le signal supplémentaire d'information (Sz), lors de l'arrivée d'au moins un bit (9) du signal (pc) possédant une première polarité, un bit supplémentaire (11) est produit parmi les signaux (nc') possédant la seconde polarité.

2. Dispositif suivant la revendication 1, caractérisé par le fait qu'après la production du bit supplémentaire (11), lors de l'arrivée d'au moins un bit (12) du signal (nc) possédant la seconde polarité, un bit supplémentaire (14) est produit parmi les signaux (pc') possédant la première polarité.

3. Dispositif selon les revendications 1 et 2, caractérisé en ce qu'un bit supplémentaire (11) est produit parmi les signaux (nc') possédant la seconde polarité, et produit avec le bit déterminant (9) du signal (pc) possédant la première polarité (pc), qui arrive après l'activation du circuit logique (S1), et un bit supplémentaire (14) est produit parmi les signaux (pc') possédant la première polarité, avec le premier bit (12) faisant partie des signaux (nc) possédant la seconde polarité et qui arrivent après le bit déterminant (9).

4. Dispositif selon la revendication 3, caractérisé en ce que le bit déterminant (9) est le premier bit (9) qui correspond à la polarité considérée et arrive après l'activation du circuit logique (LC).

5. Dispositif suivant la revendication 3, caractérisé par le fait que le bit déterminant est le premier bit correspondant à la polarité considérée et qui arrive sans altération de la bipolarité après l'activation du circuit logique (LC).

7

**FIG. 1**

**FIG. 2**

FIG. 3

FIG. 5

FIG. 4